# DEMANDE DE BREVET EUROPEEN

(11) **EP 0 694 448 A1**
(43) Date de publication de la demande: **31.01.1996**
(21) Numéro de dépôt: 95401768.7
(22) Date de dépôt: 26.07.1995
(51) Int. Cl.: B60R 25/00

(54) **Antivol pour véhicule, notamment pour poids lourd**

(30) Priorité: 27.07.1994 FR 9409549
(71) Demandeur: Zivanovic, Milovoye, F-92300 Levallois (FR)
(72) Inventeur: Zivanovic, Milovoye, F-92300 Levallois (FR)
(74) Mandataire: Renaudie, Jacques

(57) **Abrégé**

Cet antivol comprend un support (4, 5) fixé au plancher du véhicule, et portant un boîtier (6) dont la face, tournée du côté du levier de vitesses (3), est ouverte, ce boîtier contenant deux mâchoires (8, 9) articulées autour d'un axe vertical (10), s'étendant, en dehors du boîtier, au-delà du levier de vitesses, comportant chacune un évidement (12, 13) pour enserrer partiellement le levier de vitesses (3), les deux mâchoires (8, 9) étant articulées sur le boîtier à la façon d'une paire de ciseaux, pour pouvoir, en position de fermeture, bloquer le levier de vitesses (3), et en position d'ouverture, laisser la libre manoeuvre de celui-ci, les extrémités postérieures des mâchoires, c'est-à-dire celles situées à l'intérieur du boîtier, comportant des évidements ou encoches (14, 15), qui sont alignés dans un même plan vertical, lorsque les mâchoires sont en position de fermeture, le boîtier contenant également une serrure (17, 18) dont la batteuse ou lame (20) est destinée à venir s'engager dans les évidements (14, 15) des deux mâchoires (8, 9), pour immobiliser celles-ci en position de fermeture, le barillet de la serrure étant alors dans une position permettant le retrait de la clé (22) qui lui est associée.

## Description

La présente invention a pour objet un antivol pour véhicule, notamment pour poids-lourd.

Le pourcentage de véhicules volés est de plus en plus important, malgré des dispositifs d'alarmes de plus en plus complexes qui équipent maintenant, de façon courante, les véhicules. Les poids-lourds n'échappent pas aux vols car ils sont convoités, d'une part, pour le véhicule lui-même, mais éventuellement pour le chargement qu'ils peuvent contenir.

S'il existe des dispositifs électroniques ayant une fonction d'antivol, ces dispositifs ne donnent pas entière satisfaction, notamment lorsqu'ils sont actionnés par un code, dans la mesure où les pannes sont difficilement réparables sans l'intervention d'un spécialiste, ce qui est problèmatique lorsqu'il s'agit de poids-lourds appelés à se déplacer dans des contrées désertes.

En outre, lorsqu'il s'agit de véhicules de location, il est peu souhaitable de disposer d'un code que connaîtrait un locataire après avoir rendu le véhicule au loueur.

Le but de l'invention est de fournir un antivol pour véhicule qui soit entièrement mécanique et très fiable, et qui soit obligatoirement mis en oeuvre par le détenteur du véhicule.

A cet effet, l'antivol qu'elle concerne comprend un support fixé au plancher du véhicule, et portant un boîtier dont la face, tournée du côté du levier de vitesses, est ouverte, ce boîtier contenant deux mâchoires articulées autour d'un axe vertical, s'étendant, en dehors du boîtier, au-delà du levier de vitesses, comportant chacune un évidement pour enserrer partiellement le levier de vitesses, les deux mâchoires étant articulées sur le boîtier à la façon d'une paire de ciseaux, pour pouvoir, en position de fermeture, bloquer le levier de vitesses, et en position d'ouverture, laisser la libre manoeuvre de celui-ci, les extrémités postérieures des mâchoires, c'est-à-dire celles situées à l'intérieur du boîtier, comportant des évidements ou encoches, qui sont alignés dans un même plan vertical, lorsque les mâchoires sont en position de fermeture, le boîtier contenant également une serrure dont la batteuse ou lame est destinée à venir s'engager dans les évidements des deux mâchoires, pour immobiliser celles-ci en position de fermeture, le barillet de la serrure étant alors dans une position permettant le retrait de la clé qui lui est associée.

En conditions de circulation du véhicule, les deux mâchoires sont en position ouverte, et permettent un libre actionnement du levier de vitesses. Lorsque le conducteur s'arrête, il rapproche les deux mâchoires l'une de l'autre dans un sens de fermeture de celles-ci, position dans laquelle elles bloquent le levier de vitesses. Dans cette position, l'utilisateur peut actionner la clé de la serrure pour amener la batteuse de celle-ci dans une position dans laquelle elle verrouille les deux mâchoires. Dans cette position et seulement dans celle-ci, la clé peut être retirée de la serrure.

Dans ces conditions, l'utilisateur est obligé, lorsqu'il quitte son véhicule et qu'il veut récupérer la clé de la serrure du dispositif antivol, de placer ce dispositif antivol en position de fermeture. Si un chauffeur omet de fermer le dispositif antivol, et se fait voler son véhicule, il ne pourra fournir, à son employeur, la clé de l'antivol, ce qui fera la démonstration qu'il n'avait pas pris la précaution de fermer le dispositif antivol. En effet, lorsque les mâchoires sont en position ouverte, la clé de la serrure du dispositif antivol demeure prisonnière dans la serrure et ne peut être retirée de celle-ci.

Suivant une forme d'exécution de cet antivol, l'axe du barillet de la serrure est horizontal, et est disposé en arrière des mâchoires, transversalement à celles-ci lorsque les mâchoires sont en position de fermeture.

Avantageusement, les deux mâchoires sont associées à un ressort agissant sur elles dans un sens d'ouverture, lorsque les mâchoires sont libérées par la serrure.

Ainsi, lorsque la serrure est actionnée dans un sens de dégagement de la batteuse hors des évidements de verrouillage des deux mâchoires, celles-ci s'écartent automatiquement sous l'action du ressort, et libèrent le levier de vitesses.

Selon une forme d'exécution de cet antivol, l'une des mâchoires possède une section transversale en U, alors que l'autre mâchoire est en forme de fer plat, et destiné à s'encastrer pour partie au moins dans la première mâchoire.

En outre, chaque mâchoire comporte, sur son bord extérieur, un épaulement destiné à venir prendre appui contre une butée solidaire du boîtier, pour limiter le pivotement de la mâchoire considérée en direction du levier de vitesses.

Selon une autre caractéristique de l'invention, la mâchoire en forme de fer plat comporte un perçage qui, débouchant radialement dans l'orifice permettant le passage de l'axe de rotation, sert au passage d'une vis, dont l'extrémité est engagée dans une gorge ménagée dans l'axe.

Selon une possibilité, la serrure peut être montée dans le logement du boîtier qui lui est destiné, et être fixée dans ce logement par vissage par exemple. Il doit être noté que, même si les vis de fixation de la serrure étaient démontées, il ne serait pas possible de déverrouiller l'antivol puisque la batteuse de la serrure est engagée dans les évidements des mâchoires, et rend impossible le retrait de la serrure hors de son logement.

Suivant une autre possibilité permettant une interchangeabilité facile de la serrure, le corps de la serrure de verrouillage des mâchoires est disposé dans un premier logement du boîtier dont le fond présente une ouverture de mise en communication avec un second logement, coaxial au premier, et débouchant du côté opposé au premier logement, l'ouverture ménagée dans le fond servant au passage d'une patte, solidaire du corps de la première serrure et comportant un évidement dans lequel est destinée à venir s'engager la batteuse ou lame d'une seconde serrure, pour assurer le verrouillage des première et seconde serrures dans leurs logements respectifs.

La seconde serrure est maintenue dans son logement par le verrouillage qu'elle assure de la première serrure dans son propre logement.

Afin de renforcer l'inviolabilité du système, le boîtier, les mâchoires et l'axe de rotation de celles-ci sont réalisés en acier cémenté.

De toute façon, l'invention sera bien comprise à l'aide de la description qui suit, en référence au dessin schématique annexé représentant, à titre d'exemple non limitatif, une forme d'exécution de cet antivol :
Figure 1 est une vue en perspective de cet antivol en position de fermeture, l'antivol étant monté dans un véhicule dont le siège de droite a été enlevé ;
Figure 2 est une vue similaire à figure 1, dans laquelle l'antivol est en position d'ouverture ;
Figures 3 et 4 sont des vues en coupe par un plan horizontal de l'antivol, respectivement, en position fermée et en position ouverte ;

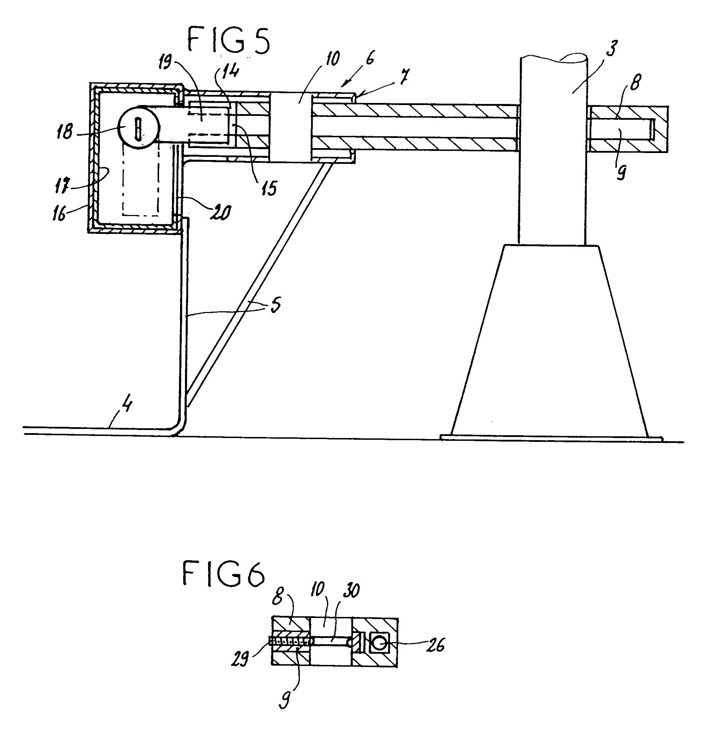

Figure 5 est une vue en coupe de cet antivol par un plan vertical ;
Figure 6 est une vue partielle de l'antivol en coupe par un plan horizontal selon la ligne VI-VI de figure 3.

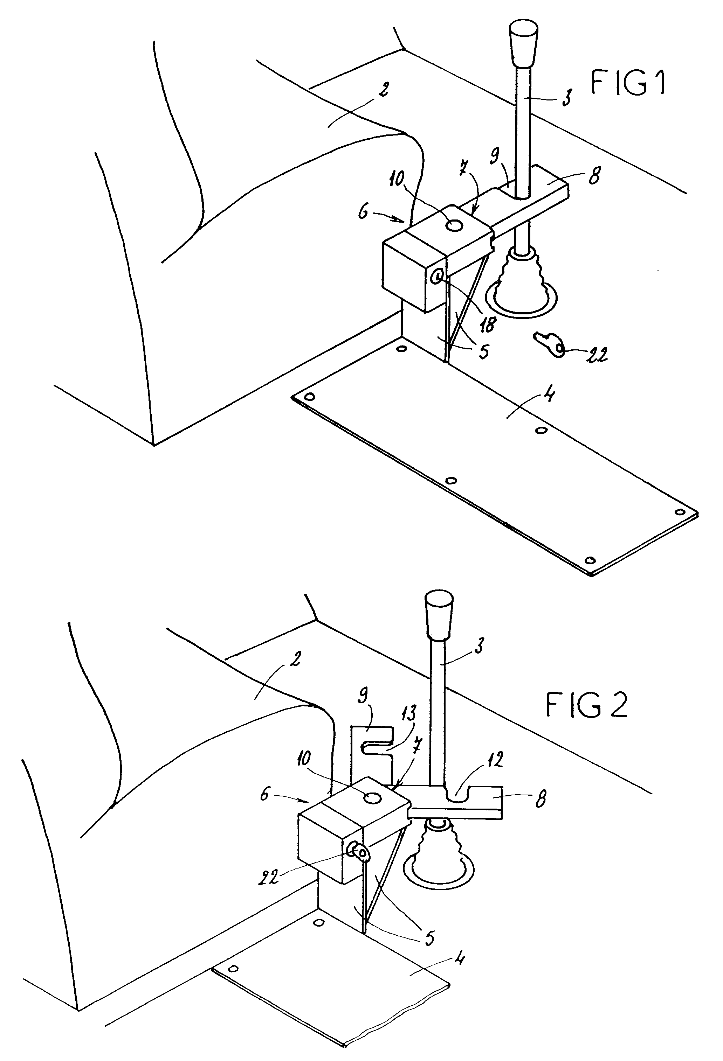

La figure 1 représente schématiquement l'intérieur d'un véhicule comprenant le siège du conducteur 2 ainsi qu'un levier de vitesses 3 dépassant du plancher et disposé sensiblement verticalement.

L'antivol, selon l'invention, comprend une platine métallique 4 destinée à être fixée de façon sure au sol du véhicule, avant que le siège du passager, non représenté au dessin, ne soit remonté. Cette platine 4 porte un support vertical 5 à l'extrémité supérieure duquel est disposé un boîtier 6. Le boîtier 6 dont la face 7, tournée du côté du levier de vitesses, est ouverte, contient deux mâchoires 8, 9 articulées sur le boîtier autour d'un axe vertical 10, s'étendant au-delà du levier de vitesses 3, comportant chacune un évidement, respectivement, 12, 13 pour enserrer partiellement le levier de vitesses.

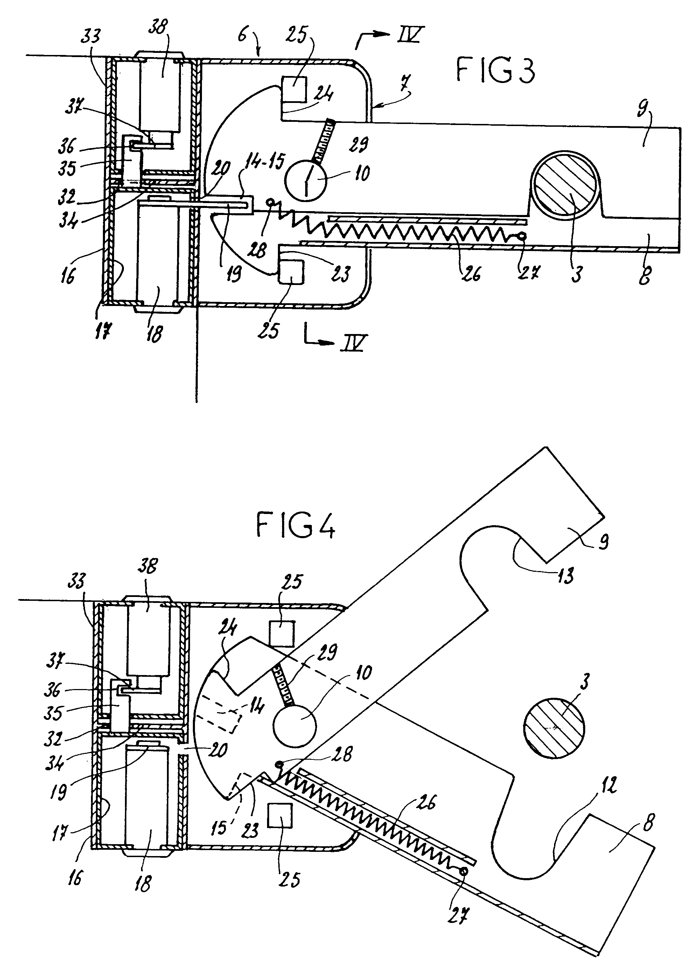

L'articulation des deux mâchoires 8, 9 sur le boîtier 6 autour de l'axe vertical 10 se fait à la façon d'une paire de ciseaux, pour pouvoir, en position de fermeture, représentée notamment aux figures 1 et 3, enserrer le levier de vitesses pour bloquer celui-ci. En position d'ouverture représentée aux figures 2 et 4, les mâchoires 8, 9 laissent la libre manoeuvre du levier de vitesses.

Les extrémités Postérieures des mâchoires, c'est-à-dire celles situées à l'intérieur du boîtier 6, comportent des évidements ou encoches, respectivement 14, 15, qui sont alignés dans un même plan vertical, comme montré à la figure 3, lorsque les mâchoires sont en position de fermeture.

Dans un logement 16 du boîtier, orienté horizontalement, et débouchant latéralement, est monté le corps 17 d'une serrure dont l'axe du barillet est horizontal, et orienté transversalement aux mâchoires lorsque celles-ci sont en position de fermeture. La serrure est équipée d'une lame ou batteuse 19 traversant une fente 20 que comporte le logement du barillet, afin de pouvoir venir s'engager dans les évidements 14, 15 des mâchoires 8, 9 en position de fermeture de celles-ci.

L'actionnement de la serrure est effectué à l'aide d'une clé 22 qui ne peut être retirée du barillet 18 que lorsque la batteuse 19 est en position horizontale, c'est-à-dire en position de verrouillage des deux mâchoires.

Lorsque la batteuse est inclinée, ce qui est le cas lorsque les mâchoires sont en position ouverte, la batteuse prenant appui contre la face inférieure de l'une des mâchoires, la clé 22 ne peut être retirée du barillet 18.

Comme montré notamment aux figures 3 et 4, les deux mâchoires 8, 9 présentent, dans leur zone Postérieure, des épaulements 23, 24 destinés à venir en appui contre des butées 25 solidaires du boîtier pour limiter le pivotement des mâchoires dans le sens de la fermeture.

La mâchoire 8 possède une section transversale en U, et est ouverte en direction du levier de vitesses 3, tandis que l'autre mâchoire 9 est en forme de fer plat destiné à s'encastrer, pour partie au moins, dans la première mâchoire en vue de réaliser l'articulation de l'une sur l'autre.

Comme montré notamment aux figures 3 et 4, la première mâchoire 8 contient un ressort 26 dont une extrémité 27 est fixée sur la mâchoire 8 et dont l'autre extrémité 28 est fixée sur la mâchoire 9, ce ressort 26 agissant dans un sens d'ouverture des deux mâchoires.

La mâchoire 9 comporte, pour sa part, un perçage débouchant radialement dans l'orifice destiné au montage de l'axe de rotation 10. Ce passage sert au logement d'une vis 29 dont l'extrémité est engagée dans une gorge 30 ménagée dans l'axe, ce qui empêche en conditions d'utilisation le retrait de l'axe.

II doit être noté que le boîtier, les mâchoires et l'axe de rotation 10 sont en acier cémenté, ce qui limite les risques de destruction de l'appareil.

Dans la forme d'exécution représentée au dessin, et notamment aux figures 3 et 4, le corps de serrure 17 est disposé dans un premier logement 16 du boîtier dont le fond présente une ouverture 32 de mise en communication avec un second logement 33, coaxial au premier, et débouchant du coté opposé au premier logement. L'ouverture 32, ménagée dans le fond 34, sert au passage d'une patte 35 solidaire du corps 17 de la première serrure, cette patte comportant un évidement 36 dans lequel est destinée à venir s'engager la batteuse 37 d'une seconde serrure 38. Les deux serrures 17 et 38 se retiennent donc mutuellement dans leurs logements respectifs 16, 33.

Il ressort de la structure et du fonctionnement de cet appareil que celui-ci présente une très grande sécurité d'utilisation, et qu'il oblige l'utilisateur à l'utiliser, puisque le retrait de la clé 22 ne peut être réalisé que lorsque le dispositif de verrouillage est en position de fermeture.

Il peut être noté que, lorsque l'antivol est en position de fermeture, le corps de la serrure 17 ne peut pas être retiré, à supposer même que les moyens de fixation de cette serrure soient détériorés, et que les mâchoires 8, 9 ne peuvent être extraites du boîtier, à supposer même que l'axe 10 soit détruit.

Comme il va de soi, l'invention ne se limite pas à la seule forme d'exécution de cet antivol, décrite ci-dessus à titre d'exemple ; elle en embrasse, au contraire, toutes les variantes.

C'est ainsi notamment que la seconde serrure 38 pourrait être supprimée, la première serrure 17 étant fixée par exemple par des vis, sans que l'on sorte pour autant du cadre de l'invention.

## Revendications

**1. -** Antivol pour véhicule, notamment pour poids-lourd, équipé d'un levier de vitesses au plancher, caractérisé en ce qu'il comprend un support (4, 5) fixé au plancher du véhicule, et portant un boîtier (6) dont la face, tournée du côté du levier de vitesses (3), est ouverte, ce boîtier contenant deux mâchoires (8, 9) articulées autour d'un axe vertical (10), s'étendant, en dehors du boîtier, au-delà du levier de vitesses, comportant chacune un évidement (12, 13) pour enserrer partiellement le levier de vitesses (3), les deux mâchoires (8, 9) étant articulées sur le boîtier à la façon d'une paire de ciseaux, pour pouvoir, en position de fermeture, bloquer le levier de vitesses (3), et en position d'ouverture, laisser la libre manoeuvre de celui-ci, les extrémités postérieures des mâchoires, c'est-à-dire celles situées à l'intérieur du boîtier, comportant des évidements ou encoches (14, 15), qui sont alignés dans un même plan vertical, lorsque les mâchoires sont en position de fermeture, le boîtier contenant également une serrure (17, 18) dont la batteuse ou lame (20) est destinée à venir s'engager dans les évidements (14, 15) des deux mâchoires (8, 9), pour immobiliser celles-ci en position de fermeture, le barillet de la serrure étant alors dans une position permettant le retrait de la clé (22) qui lui est associée.

**2.** Antivol selon la revendication 1, caractérisé en ce que l'axe du barillet (18) de la serrure est horizontal, et est disposé en arrière des mâchoires (8, 9), transversalement à celles-ci lorsque les mâchoires sont en position de fermeture.

**3.** Antivol selon l'une quelconque des revendications 1 et 2, caractérisé en ce que les deux mâchoires (8, 9) sont associées à un ressort (26) agissant sur elles dans un sens d'ouverture, lorsque les mâchoires sont libérées par la serrure.

**4.** Antivol selon l'une quelconque des revendications 1 à 3, caractérisé en ce que l'une (8) des mâchoires possède une section transversale en U, alors que l'autre mâchoire (9) est en forme de fer plat, destiné à s'encastrer pour partie au moins dans la première mâchoire (8).

**5.** Antivol selon l'une quelconque des revendications 1 à 4, caractérisé en ce que chaque mâchoire (8, 9) comporte, sur son bord extérieur, un épaulement (23, 24) destiné à venir prendre appui contre une butée (25) solidaire du boîtier, pour limiter le pivotement de la mâchoire considérée en direction du levier de vitesses.

**6.** Antivol selon la revendication 4, caractérisé en ce que la mâchoire (9) en forme de fer plat comporte un perçage qui, débouchant radialement dans l'orifice permettant le passage de l'axe de rotation, sert au passage d'une vis (29), dont l'extrémité est engagée dans une gorge (30) ménagée dans l'axe.

**7.** Antivol selon l'une quelconque des revendications 1 à 6, caractérisé en ce que le corps (17) de la serrure de verrouillage des mâchoires (8, 9) est disposé dans un premier logement (16) du boîtier dont le fond (34) présente une ouverture (32) de mise en communication avec un second logement (33), coaxial au premier, et débouchant du côté opposé au premier logement, l'ouverture (32) ménagée dans le fond servant au passage d'une patte (35), solidaire du corps (17) de la première serrure et comportant un évidement (36) dans lequel est destinée à venir s'engager la batteuse (37) ou lame d'une seconde serrure (38), pour assurer le verrouillage des première et seconde serrures (17, 38) dans leurs logements (16, 36) respectifs.

**8.** Antivol selon l'une quelconque des revendications 1 à 7, caractérisé en ce que le boîtier (6), les mâchoires (8, 9) et l'axe (10) de rotation de celles-ci sont réalisés en acier cémenté.
